# EUROPEAN PATENT APPLICATION

(11) **EP 4 575 371 A1**
(43) Date of publication of application: **25.06.2025**
(21) Application number: 23897375.4
(22) Date of filing: 02.11.2023
(51) Int. Cl.: F28D 9/00, F25B 1/00, B60H 1/32, F25B 41/40

(54) **MANIFOLD**

(30) Priority: 30.11.2022 JP 2022191922
(71) Applicant: AISIN CORPORATION, Kariya-shi, Aichi 448-8650 (JP)
(72) Inventor: MANABE, Takashi, Kariya-shi, Aichi 448-8650 (JP); MIZUNO, Yuya, Kariya-shi, Aichi 448-8650 (JP); YAMAZAKI, Tateki, Kariya-shi, Aichi 448-8650 (JP)
(74) Representative: Kramer Barske Schmidtchen Patentanwälte PartG mbB
(86) International application number: PCT/JP2023/039674
(87) International publication number: WO 2024/116720

(57) **Abstract**

A manifold includes a channel housing having a first channel through which a refrigerant flows between a compressor and a condenser, and a second channel through which the refrigerant flows between the condenser and an evaporator. The first channel is provided near one end of the channel housing. The second channel is provided near the other end of the channel housing. The first channel and the second channel are provided away from each other.

## Description

### TECHNICAL FIELD

The present disclosure relates to a manifold.

### BACKGROUND ART

There is known a system related to thermal management, such as an air conditioning system for a vehicle (e.g., Patent Document 1). Patent Document 1 discloses a thermal management system including a compressor that compresses a low-temperature refrigerant vapor in a subsystem into a high-temperature refrigerant vapor.

### Related Art Documents

### Patent Documents

Patent Document 1: Japanese Unexamined Patent Application Publication No. 2011-255879 (JP 2011-255879 A)

### SUMMARY OF THE INVENTION

### Problem to be Solved by the Invention

In the thermal management system disclosed in Patent Document 1, for example, when a high-temperature channel through which the high-temperature refrigerant vapor compressed by the compressor flows and a low-temperature channel through which the low-temperature refrigerant vapor flows are disposed close to each other, heat may be exchanged between the high-temperature refrigerant and the low-temperature refrigerant.

The present disclosure has been made in view of the above problem, and has an object to provide a manifold that suppresses heat exchange between a high-temperature refrigerant flowing through a high-temperature channel and a low-temperature refrigerant flowing through a low-temperature channel.

### Means for Solving the Problem

The feature of the manifold according to the present disclosure is as follows. The manifold includes a channel housing having a first channel through which a refrigerant flows from a compressor to a condenser, and a second channel through which the refrigerant flows from the condenser to an evaporator. The first channel is provided near one end of the channel housing. The second channel is provided near the other end of the channel housing. The first channel and the second channel are provided away from each other.

In this configuration, in the channel housing, the first channel through which the high-temperature refrigerant flows from the compressor to the condenser is provided near the one end of the channel housing, the second channel through which the low-temperature refrigerant flows from the condenser to the evaporator is provided near the other end of the channel housing, and the first channel and the second channel are provided away from each other. Therefore, the heat exchange between the high-temperature refrigerant and the low-temperature refrigerant can be suppressed.

### BRIEF DESCRIPTION OF THE DRAWINGS

[FIG. 1] FIG. 1 is a diagram showing a refrigerant circuit according to an embodiment.
[FIG. 2] FIG. 2 is a diagram showing the configuration of a channel housing according to the embodiment.

### MODES FOR CARRYING OUT THE INVENTION

Hereinafter, a manifold according to an embodiment of the present disclosure will be described with reference to the drawings. However, the present disclosure is not limited to the following embodiment, and various modifications may be made without departing from the spirit and scope of the present disclosure.

### [Refrigerant Circuit]

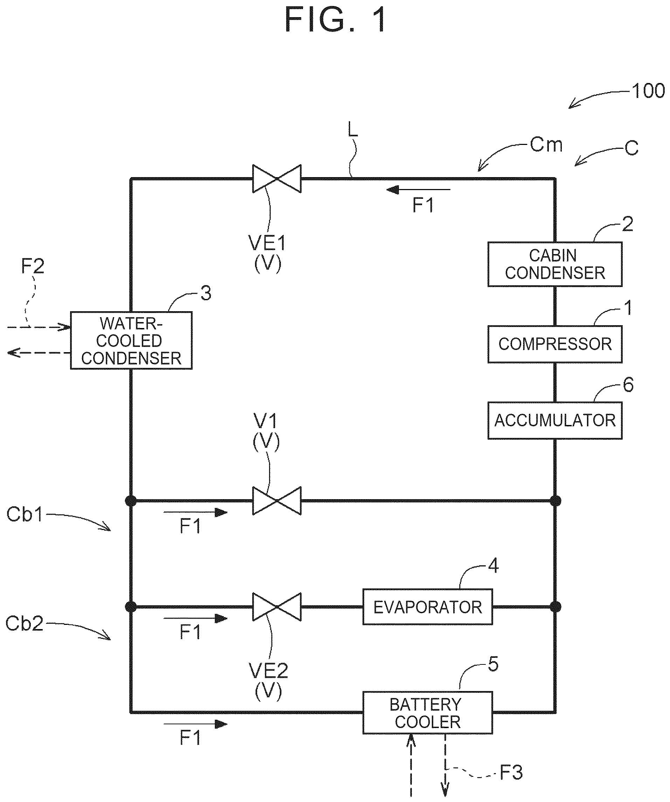

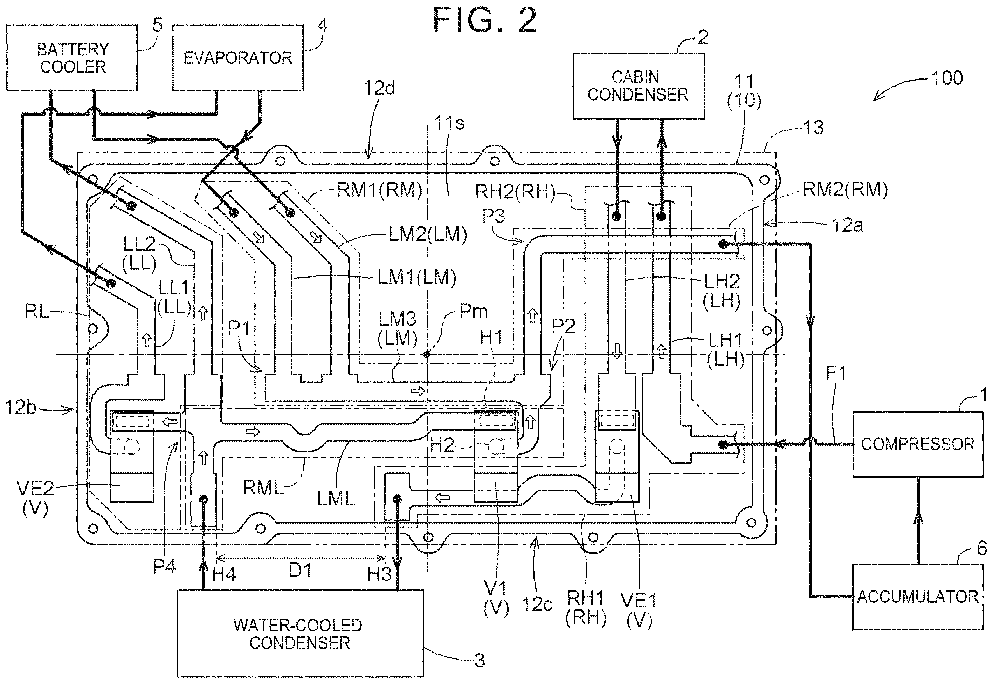

First, a refrigerant circuit C mounted on a vehicle such as an electric vehicle or a hybrid vehicle will be described with reference to FIG. 1. The refrigerant circuit C is constituted by a refrigerant channel L through which a cooling and heating refrigerant F1 for adjusting the temperature in a vehicle cabin flows. The refrigerant F1 is a refrigerant such as hydrofluorocarbon (HFC) or hydrofluoroolefin (HFO). The refrigerant channel L is provided inside a channel housing 11 of a manifold 10 described later with reference to FIG. 2.

As shown in FIG. 1, the refrigerant circuit C includes a compressor 1 (an example of a compressor), a cabin condenser 2 (heating condenser), a water-cooled condenser 3 (an example of a condenser), an evaporator 4 (an example of an evaporator), a battery cooler 5 (an example of the evaporator), an accumulator 6, and valves V. The compressor 1, the cabin condenser 2, the water-cooled condenser 3, the evaporator 4, the battery cooler 5, the accumulator 6, and the valves V are connected via the refrigerant channel L.

The valves V include an on-off valve V1 provided between the water-cooled condenser 3 and the accumulator 6. The valves V further include a first expansion valve VE1 provided between the cabin condenser 2 and the water-cooled condenser 3, and a second expansion valve VE2 provided between the water-cooled condenser 3 and the evaporator 4.

The on-off valve V1 controls (allows or blocks) the flow of the refrigerant F1 between the water-cooled condenser 3 and the accumulator 6. When the on-off valve V1 is open, the refrigerant F1 flows through the compressor 1, the cabin condenser 2, the first expansion valve VE1, the water-cooled condenser 3, the on-off valve V1, the accumulator 6, and the compressor 1 in this order. Hereinafter, the refrigerant circuit C constituted by the compressor 1, the cabin condenser 2, the water-cooled condenser 3, the on-off valve V1, and the accumulator 6 will be referred to as "main circuit Cm."

The first expansion valve VE1 and the second expansion valve VE2 expand the refrigerant F1 to adjust the pressure of the refrigerant F1. When the second expansion valve VE2 is open, the refrigerant F1 flows through the second expansion valve VE2 and the evaporator 4 in this order, and then flows into the main circuit Cm between the on-off valve V1 and the accumulator 6. Hereinafter, the refrigerant circuit C that branches from the main circuit Cm and is provided with the second expansion valve VE2 and the evaporator 4 will be referred to as "first branch circuit Cb1." For example, when the temperature in the vehicle cabin is to be increased (during a heating operation for the vehicle cabin), the on-off valve V1 is open and the second expansion valve VE2 is closed. When the temperature in the vehicle cabin is to be reduced (during a cooling operation for the vehicle cabin), the on-off valve V1 is closed and the second expansion valve VE2 is open.

The battery cooler 5 includes an expansion valve. The expansion valve of the battery cooler 5 is open when adjusting the temperature of a battery. When the expansion valve of the battery cooler 5 is open, the refrigerant F1 flows through the battery cooler 5 and then flows into the main circuit Cm between the on-off valve V1 and the accumulator 6. Hereinafter, the refrigerant circuit C that branches from the main circuit Cm and is provided with the battery cooler 5 will be referred to as "second branch circuit Cb2."

The compressor 1 compresses the refrigerant F1 into a high-temperature and high-pressure gas. Hereinafter, the temperature of the refrigerant F1 compressed by the compressor 1 will be referred to as "first temperature." The first temperature is, for example, 80°C to 90°C.

The refrigerant F1 compressed by the compressor 1 is sent to the cabin condenser 2, exchanges heat with air in the vehicle cabin during the heating operation (temperature drops as heat is removed), and is sent to the water-cooled condenser 3 via the first expansion valve VE1. A first heating medium F2 circulating through a circuit different from the refrigerant circuit C (e.g., a cooling circuit for cooling electronic circuits mounted on the vehicle) flows through the water-cooled condenser 3. The first heating medium F2 is a coolant such as a long-life coolant (LLC), insulating oil such as paraffin-based oil, or a refrigerant such as hydrofluorocarbon (HFC) or hydrofluoroolefin (HFO). The refrigerant F1 sent to the water-cooled condenser 3 exchanges heat with the first heating medium F2 flowing through the water-cooled condenser 3 (temperature drops as heat is removed). Hereinafter, the temperature of the refrigerant F1 that has dropped in the water-cooled condenser 3 will be referred to as "second temperature." The second temperature is, for example, 15°C to 25°C.

The refrigerant F1 sent to the second expansion valve VE2 is expanded into a gas-liquid mixed state (mist), and is sent to the evaporator 4. In the evaporator 4, the refrigerant F1 is gasified by exchanging heat with air introduced from the outside (temperature rises by removing heat).

The refrigerant F1 sent to the battery cooler 5 is expanded by the expansion valve of the battery cooler 5. A second heating medium F3 circulating through a circuit different from the refrigerant circuit C (e.g., a cooling circuit for cooling the battery mounted on the vehicle) flows through the battery cooler 5. The second heating medium F3 is a coolant such as a long-life coolant (LLC), insulating oil such as paraffin-based oil, or a refrigerant such as hydrofluorocarbon (HFC) or hydrofluoroolefin (HFO). The refrigerant F1 sent to the battery cooler 5 is gasified by exchanging heat with the second heating medium F3 flowing through the battery cooler 5 (temperature rises by removing heat). Hereinafter, the temperature of the refrigerant F1 after the heat exchange in the evaporator 4 or the battery cooler 5 will be referred to as "third temperature." The third temperature is, for example, 60°C to 70°C.

The refrigerant F1 after the heat exchange in the evaporator 4 is sent to the accumulator 6, and the liquid contained in the refrigerant F1 is separated. The refrigerant F1 from which the liquid has been separated returns to the compressor 1. The refrigerant F1 after the heat exchange in the battery cooler 5 is also sent to the accumulator 6, and the liquid contained in the refrigerant F1 is separated. The gaseous refrigerant F1 from which the liquid has been separated returns to the compressor 1.

As described above, the temperature of the refrigerant F1 circulating through the refrigerant circuit C changes. Specifically, the first temperature of the refrigerant F1 flowing from the compressor 1 to the water-cooled condenser 3 is highest. The third temperature of the refrigerant F1 flowing from the evaporator 4 and/or the battery cooler 5 to the compressor 1 is next highest. The second temperature of the refrigerant F1 flowing from the water-cooled condenser 3 to the evaporator 4 and/or the battery cooler 5 is lowest. The temperature of the refrigerant F1 flowing from the water-cooled condenser 3 to merge with the main circuit Cm via the on-off valve V1 changes between the second temperature and the third temperature depending on the operating condition such as heating or cooling (the second temperature is lowest and the third temperature is highest).

### [Configuration of Manifold]

Next, the configuration of the manifold 10 including the refrigerant channel L will be described with reference to FIG. 2. FIG. 2 is a diagram showing the configuration of the channel housing 11 of the manifold 10. The manifold 10 includes the channel housing 11 formed (e.g., molded) using a metal material such as aluminum, a resin, etc. and a plate member 13, and is structured by joining the channel housing 11 to the plate member 13. The refrigerant channel L described with reference to FIG. 1 is formed inside the channel housing 11 (between the channel housing 11 and the plate member 13). The manifold 10 is mounted on the vehicle.

As shown in FIG. 2, the compressor 1, the cabin condenser 2, the water-cooled condenser 3, the evaporator 4, the battery cooler 5, and the accumulator 6 are provided outside the channel housing 11. The on-off valve V1, the first expansion valve VE1, and the second expansion valve VE2 are also provided outside the channel housing 11. In FIG. 2, the on-off valve V1, the first expansion valve VE1, and the second expansion valve VE2 are provided outside the channel housing 11, but are shown by continuous lines to indicate the respective positions.

In the present embodiment, the channel housing 11 has a box shape having a rectangular flat surface (hereinafter referred to as "principal surface 11s"). The principal surface 11s of the channel housing 11 is rectangular, and the refrigerant channel L is formed in the principal surface 11s. Hereinafter, the four ends of the channel housing 11 will be referred to as "first end 12a" (right end in the figure), "second end 12b" (left end in the figure), "third end 12c" (lower end in the figure), and "fourth end 12d" (upper end in the figure). The longitudinal direction of the principal surface 11s will be simply referred to as "longitudinal direction," and the transverse direction of the principal surface 11s will be simply referred to as "transverse direction."

The on-off valve V1, the first expansion valve VE1, and the second expansion valve VE2 are provided so as to overlap the channel housing 11 when viewed in a direction orthogonal to the principal surface 11s. Specifically, the on-off valve V1, the first expansion valve VE1, and the second expansion valve VE2 are provided closer to the third end 12c (lower side in the figure) than a midpoint Pm in the transverse direction. The midpoint Pm is the "center" of the channel housing 11, and is a point where two diagonals of the channel housing 11 intersect each other.

The first expansion valve VE1, the on-off valve V1, and the second expansion valve VE2 are provided in this order from the first end 12a (right side in the figure) along the longitudinal direction. Specifically, the first expansion valve VE1 is provided closer to the first end 12a than the midpoint Pm in the longitudinal direction, the on-off valve V1 is provided closer to the midpoint Pm than the first expansion valve VE1 in the longitudinal direction, and the second expansion valve VE2 is provided closer to the second end 12b (left side in the figure) than the midpoint Pm in the longitudinal direction.

The channel housing 11 has outlets through which the refrigerant F1 flows out from the channel housing 11 to the first expansion valve VE1, the on-off valve V1, and the second expansion valve VE2. The channel housing 11 also has inlets through which the refrigerant F1 flows into the channel housing 11 from the first expansion valve VE1, the on-off valve V1, and the second expansion valve VE2. Hereinafter, an outlet through which the refrigerant F1 from the water-cooled condenser 3 flows out to the on-off valve V1 among the outlets formed in the channel housing 11 will be referred to as "outlet H1," and an inlet through which the refrigerant F1 flows from the on-off valve V1 into the channel housing 11 among the inlets formed in the channel housing 11 will be referred to as "inlet H2." The outlet H1 and the inlet H2 are provided so as to face the on-off valve V1. The channel housing 11 also has a condenser outlet H3 (an example of a condenser outlet) through which the refrigerant F1 flows out toward the water-cooled condenser 3, and a condenser inlet H4 (an example of a condenser inlet) through which the refrigerant F1 flows in from the water-cooled condenser 3. The condenser outlet H3 and the condenser inlet H4 are spaced away from each other by a separation distance D1 in the longitudinal direction.

### [Configuration of Refrigerant Channel]

As described with reference to FIG. 1, the first temperature of the refrigerant F1 flowing from the compressor 1 to the water-cooled condenser 3 is highest. The third temperature of the refrigerant F1 flowing from the evaporator 4 and/or the battery cooler 5 to the compressor 1 is next highest. The second temperature of the refrigerant F1 flowing from the water-cooled condenser 3 to the evaporator 4 and/or the battery cooler 5 is lowest. That is, the channel housing 11 includes, as the refrigerant channel L (see FIG. 1), a high-temperature channel LH (an example of a first channel) through which a high-temperature refrigerant F1 flows from the compressor 1 to the water-cooled condenser 3, a medium-temperature channel LM (an example of a third channel) through which a medium-temperature refrigerant F1 flows from the evaporator 4 and/or the battery cooler 5 to the compressor 1, and a low-temperature channel LL (an example of a second channel) through which a low-temperature refrigerant F1 flows from the water-cooled condenser 3 to the evaporator 4 and/or the battery cooler 5. In the present embodiment, the channel housing 11 further includes, as the refrigerant channel L, a medium-low-temperature channel LML through which the refrigerant F1 having a low-to-medium temperature flows from the water-cooled condenser 3 to the on-off valve V1.

The high-temperature channel LH includes a first high-temperature channel LH1 through which the refrigerant F1 flows from the compressor 1 to the cabin condenser 2, and a second high-temperature channel LH2 through which the refrigerant F1 flows from the cabin condenser 2 to the water-cooled condenser 3.

The first high-temperature channel LH1 extends from the first end 12a of the channel housing 11 as a base end toward the second end 12b, bends toward the fourth end 12d, and reaches the fourth end 12d.

The second high-temperature channel LH2 extends from the fourth end 12d (specifically, a portion of the fourth end 12d closer to the second end 12b than the terminal end of the first high-temperature channel LH1) toward the third end 12c, passes through the first expansion valve VE1, bends toward the second end 12b, and reaches the third end 12c at a point closer to the second end 12b than the midpoint Pm in the longitudinal direction.

The second high-temperature channel LH2 is provided across the on-off valve V1 on the first end 12a side of the midpoint Pm in the longitudinal direction. The outlet H1 for the refrigerant F1 to the on-off valve V1 (outlet H1 through which the medium-low-temperature refrigerant F1 from the water-cooled condenser 3 flows out from the channel housing 11 to the on-off valve V1) is located away from the second high-temperature channel LH2 (portion across which the second high-temperature channel LH2 is provided) at a position where the outlet H1 faces the on-off valve V1. The inlet H2 is provided between the outlet H1 and the portion across which the second high-temperature channel LH2 is provided.

The medium-temperature channel LM includes a first medium-temperature channel LM1 through which the refrigerant F1 flows from the evaporator 4 to the accumulator 6, a second medium-temperature channel LM2 through which the refrigerant F1 flows from the battery cooler 5 to the accumulator 6, and a confluent medium-temperature channel LM3 where the first medium-temperature channel LM1 and the second medium-temperature channel LM2 are connected (streams of the refrigerant F1 merge).

The first medium-temperature channel LM1 extends from the fourth end 12d toward the third end 12c so as to be inclined with respect to the fourth end 12d (extend away from the second end 12b as the distance from the fourth end 12d increases), changes the direction to a direction parallel to the second end 12b (including "substantially parallel"; the same applies hereinafter) at a point closer to the fourth end 12d than the midpoint Pm in the transverse direction, and extends to a first bending point P1 (on the fourth end 12d side of the medium-low-temperature channel LML). The first medium-temperature channel LM1 bends toward the first end 12a at the first bending point P1, and reaches the confluent medium-temperature channel LM3.

The second medium-temperature channel LM2 extends parallel to the first medium-temperature channel LM1 from the fourth end 12d (specifically, a portion of the fourth end 12d closer to the first end 12a than the base end of the first medium-temperature channel LM1) toward the third end 12c to reach the confluent medium-temperature channel LM3.

The confluent medium-temperature channel LM3 extends along the longitudinal direction from the terminal end of the first medium-temperature channel LM1 toward the first end 12a, and is connected at a junction point P2 to the refrigerant channel L that runs from the water-cooled condenser 3 via the on-off valve V1. The confluent medium-temperature channel LM3 bends toward the fourth end 12d at the junction point P2, and extends along the transverse direction toward the fourth end 12d. The confluent medium-temperature channel LM3 further bends toward the first end 12a at a second bending point P3 (closer to the fourth end 12d than the midpoint Pm in the transverse direction), extends along the longitudinal direction, and reaches the first end 12a. The confluent medium-temperature channel LM3 is provided across the high-temperature channel LH between the second bending point P3 and the terminal end.

The medium-low-temperature channel LML is the refrigerant channel L through which the refrigerant F1 flows from the water-cooled condenser 3 to the accumulator 6 via the on-off valve V1. The medium-low-temperature channel LML extends from the third end 12c (specifically, a point closer to the second end 12b than the terminal end of the second high-temperature channel LH2) toward the fourth end 12d in the transverse direction to reach a branch point P4. The branch point P4 is a position where the refrigerant F1 from the water-cooled condenser 3 branches into the refrigerant F1 flowing toward the on-off valve V1, the refrigerant F1 flowing toward the evaporator 4, and the refrigerant F1 flowing toward the second expansion valve VE2.

The medium-low-temperature channel LML bends toward the first end 12a at the branch point P4, extends along the longitudinal direction toward the first end 12a, passes through the on-off valve V1, and reaches the junction point P2 with the confluent medium-temperature channel LM3.

The low-temperature channel LL includes a first low-temperature channel LL1 through which the refrigerant F1 flows from the water-cooled condenser 3 to the evaporator 4, and a second low-temperature channel LL2 through which the refrigerant F1 flows from the water-cooled condenser 3 to the battery cooler 5. In the present embodiment, the base ends of the first low-temperature channel LL1 and the second low-temperature channel LL2 are at the branch point P4.

The first low-temperature channel LL1 passes through the second expansion valve VE2, extends along the transverse direction toward the fourth end 12d, changes the direction so as to be inclined with respect to the fourth end 12d (extend closer to the second end 12b as the distance from the fourth end 12d decreases) at a point closer to the fourth end 12d than the midpoint Pm in the transverse direction, and reaches the second end 12b.

The second low-temperature channel LL2 extends along the transverse direction. The second low-temperature channel LL2 changes the direction so as to be inclined with respect to the fourth end 12d (extend closer to the second end 12b as the distance from the fourth end 12d decreases) at a point closer to the fourth end 12d than the bending point of the first low-temperature channel LL1 in the transverse direction, and reaches the corner between the second end 12b and the fourth end 12d.

### [Regions in Channel Housing]

As shown in FIG. 2, the principal surface 11s of the channel housing 11 is partitioned into regions including the high-temperature channel LH, the medium-temperature channel LM, the medium-low-temperature channel LML, and the low-temperature channel LL. Specifically, the channel housing 11 is partitioned into a high-temperature region RH (an example of a first region) including the high-temperature channel LH, a medium-temperature region RM (an example of a third region) including the medium-temperature channel LM, a medium-low-temperature region RML including the medium-low-temperature channel LML, and a low-temperature region RL (an example of a second region) including the low-temperature channel LL.

The high-temperature region RH (high-temperature channel LH) is provided near the first end 12a. Specifically, the high-temperature region RH is provided near the first end 12a in a range from the fourth end 12d to the third end 12c. Part of the high-temperature region RH (region near the third end 12c) protrudes toward the second end 12b. The size (area) of a protruding region RH1 of the high-temperature region RH is smaller than the size of the other region of the high-temperature region RH (hereinafter referred to as "main region RH2").

The low-temperature region RL is provided away from the high-temperature region RH. That is, the high-temperature channel LH is provided away from the low-temperature channel LL. Specifically, the high-temperature channel LH and the low-temperature channel LL are spaced away from each other by a distance equal to or longer than the distance between the condenser outlet H3 and the condenser inlet H4 (hereinafter referred to as "separation distance D1"). In the present embodiment, the low-temperature region RL (low-temperature channel LL) is provided near the second end 12b. The low-temperature region RL is provided near the second end 12b in a range from the fourth end 12d to the third end 12c, and part of the low-temperature region RL near the third end 12c recedes toward the second end 12b.

The medium-low-temperature region RML and the medium-temperature region RM are provided between the low-temperature region RL and the high-temperature region RH. The medium-low-temperature region RML is provided closer to the third end 12c than the medium-temperature region RM. In other words, the medium-temperature region RM is provided closer to the fourth end 12d than the medium-low-temperature region RML.

Part of the medium-temperature region RM is provided between the high-temperature region RH and the low-temperature region RL. The remaining part of the medium-temperature region RM is provided so as to overlap part of the high-temperature region RH (part of the main region). That is, part of the medium-temperature channel LM is provided between the high-temperature channel LH and the low-temperature channel LL. In the present embodiment, part of the medium-temperature channel LM is provided in the vicinity (an example of a central portion) of the midpoint Pm (midpoint in the longitudinal direction and the transverse direction) of the channel housing 11. That is, the medium-temperature region RM includes a middle region RM1 provided between the high-temperature channel LH and the low-temperature channel LL, and an overlapping region RM2 overlapping part of the main region RH2 of the high-temperature region RH. The size of the part of the medium-temperature region RM (middle region RM1 provided between the high-temperature region RH and the low-temperature region RL) is larger than the size of the remaining part of the medium-temperature region RM (overlapping region RM2 overlapping the high-temperature region RH).

### [Functions and Effects of Embodiment]

As described above, according to the present embodiment, the high-temperature channel LH through which the high-temperature refrigerant F1 flows from the compressor 1 to the water-cooled condenser 3 (high-temperature region RH including the high-temperature channel LH) is provided near the first end 12a of the channel housing 11. The low-temperature channel LL through which the low-temperature refrigerant F1 flows from the water-cooled condenser 3 to the evaporator 4 and/or the battery cooler 5 (low-temperature region RL including the low-temperature channel LL) is provided near the second end 12b of the channel housing 11. The high-temperature channel LH and the low-temperature channel LL are provided away from each other. Therefore, heat exchange between the high-temperature refrigerant F1 and the low-temperature refrigerant F1 can be suppressed. For example, when heat is exchanged between the high-temperature refrigerant F1 and the low-temperature refrigerant F1, thermal expansion and contraction may occur in the manifold 10 to generate thermal stress. According to the present embodiment, the heat exchange between the high-temperature refrigerant F1 and the low-temperature refrigerant F1 can be suppressed, and the generation of the thermal stress can also be suppressed.

According to the present embodiment, part of the medium-temperature channel LM through which the medium-temperature refrigerant F1 flows from the evaporator 4 and/or the battery cooler 5 to the compressor 1 is provided between the high-temperature channel LH through which the high-temperature refrigerant F1 flows and the low-temperature channel LL having a low temperature. Therefore, the heat exchange between the high-temperature refrigerant F1 and the low-temperature refrigerant F1 can be suppressed.

According to the present embodiment, at least part of the medium-temperature channel LM through which the medium-temperature refrigerant F1 flows is provided in the central portion of the channel housing 11. Therefore, the heat exchange between the high-temperature refrigerant F1 and the low-temperature refrigerant F1 can be suppressed.

According to the present embodiment, the outlet H1 through which the medium-low-temperature refrigerant F1 from the water-cooled condenser 3 flows out from the channel housing 11 to the on-off valve V1 is located away from the high-temperature channel LH through which the high-temperature refrigerant F1 flows at a position on the channel housing 11 where the outlet H1 faces the on-off valve V1. Therefore, heat exchange between the medium-low-temperature refrigerant F1 and the high-temperature refrigerant F1 can be suppressed.

### [Other Embodiments]

The present disclosure may be configured as follows in addition to the above embodiment (portions having the same functions as those of the above embodiment are denoted by the same numerals and signs as those of the above embodiment).
(1) The disposition of the high-temperature channel LH, the medium-temperature channel LM, the medium-low-temperature channel LML, and the low-temperature channel LL provided inside the manifold 10 (channel housing 11) described in the above embodiment is merely an example. The disposition of the high-temperature channel LH, the medium-temperature channel LM, the medium-low-temperature channel LML, and the low-temperature channel LL is not limited to the disposition described in the above embodiment as long as the high-temperature channel LH (high-temperature region RH) and the low-temperature channel LL (low-temperature region RL) can be provided away from each other.
(2) The present embodiment illustrates the case where the channel housing 11 has the box shape having the rectangular principal surface 11s. The shape of the channel housing 11 is not limited to the above shape and can be changed as appropriate as long as the high-temperature channel LH (high-temperature region RH) and the low-temperature channel LL (low-temperature region RL) can be provided away from each other. In this case, the configurations of the high-temperature channel LH, the medium-temperature channel LM, the medium-low-temperature channel LML, and the low-temperature channel LL formed inside the channel housing 11 may be changed as appropriate depending on the shape of the channel housing 11.
(3) The present embodiment illustrates the case where part of the medium-temperature channel LM is provided between the high-temperature channel LH and the low-temperature channel LL. The entire medium-temperature channel LM may be provided between the high-temperature channel LH and the low-temperature channel LL. In this case, for example, the confluent medium-temperature channel LM3 described with reference to FIG. 2 may reach the fourth end 12d without bending at the second bending point P3 and may be connected to the accumulator 6 outside the channel housing 11.
(4) The present embodiment illustrates the exemplary configuration in which the refrigerant circuit C (second branch circuit Cb2) includes the battery cooler 5. The refrigerant circuit C may include a chiller instead of the battery cooler 5. When the refrigerant circuit C includes the chiller instead of the battery cooler 5, the refrigerant circuit C further includes an expansion valve as the valve V between the water-cooled condenser 3 and the chiller.

The high-temperature region RH described in the present embodiment is a region including the entire first high-temperature channel LH1 and the entire second high-temperature channel LH2. The high-temperature region RH is, for example, a region enclosed by any outer edges of the first high-temperature channel LH1, the second high-temperature channel LH2, and the channel housing 11. The same applies to the medium-temperature region RM, the medium-low-temperature region RML, and the low-temperature region RL. Specifically, the medium-temperature region RM is a region including the entire first medium-temperature channel LM1 and the entire second medium-temperature channel LM2. The medium-temperature region RM is, for example, a region enclosed by any outer edges of the first medium-temperature channel LM1, the second medium-temperature channel LM2, and the channel housing 11. The medium-low-temperature region RML is also a region including the entire medium-low-temperature channel LML. The medium-low-temperature region RML is, for example, a region enclosed by any outer edges of the medium-low-temperature channel LML and the channel housing 11. The low-temperature region RL is a region including the entire first low-temperature channel LL1 and the entire second low-temperature channel LL2. The low-temperature region RL is, for example, a region enclosed by any outer edges of the first low-temperature channel LL1, the second low-temperature channel LL2, and the channel housing 11.

The following configurations are possible for the embodiments described above.
(1) The feature of the manifold 10 according to the present disclosure is as follows. The manifold 10 includes the channel housing 11 having the high-temperature channel LH (first channel) through which the refrigerant F1 flows from the compressor 1 (compressor) to the water-cooled condenser 3 (condenser), and the low-temperature channel LL (second channel) through which the refrigerant F1 flows from the water-cooled condenser 3 (condenser) to the evaporator 4 or the battery cooler 5 (evaporator). The high-temperature channel LH (first channel) is provided near one end of the channel housing 11. The low-temperature channel LL (second channel) is provided near the other end of the channel housing 11. The high-temperature channel LH (first channel) and the low-temperature channel LL (second channel) are provided away from each other.

In this configuration, in the channel housing 11, the high-temperature channel LH (first channel) through which the high-temperature refrigerant F1 flows from the compressor 1 (compressor) to the water-cooled condenser 3 (condenser) is provided near the one end of the channel housing 11, the low-temperature channel LL (second channel) through which the low-temperature refrigerant F1 flows from the water-cooled condenser 3 (condenser) to the evaporator 4 or the battery cooler 5 (evaporator) is provided near the other end of the channel housing 11, and the high-temperature channel LH (first channel) and the low-temperature channel LL (second channel) are provided away from each other. Therefore, the heat exchange between the high-temperature refrigerant F1 and the low-temperature refrigerant F1 can be suppressed.

(2) In the manifold 10 according to (1), the high-temperature channel LH (first channel) and the low-temperature channel LL (second channel) may be spaced away from each other by a distance equal to or longer than the distance between the condenser outlet H3 (condenser outlet) through which the refrigerant F1 flows out toward the water-cooled condenser 3 (condenser) and the condenser inlet H4 (condenser inlet) through which the refrigerant F1 flows in from the water-cooled condenser 3 (condenser).

In this configuration, the high-temperature channel LH and the low-temperature channel LL are spaced away from each other by the distance equal to or longer than the distance between the condenser outlet H3 and the condenser inlet H4 (hereinafter referred to as "separation distance D1"). Therefore, the heat exchange between the high-temperature refrigerant F1 and the low-temperature refrigerant F1 can be suppressed more reliably.

(3) In the manifold 10 according to (1) or (2), the one end and the other end may face each other across the midpoint Pm of the channel housing 11.

In this configuration, the one end and the other end face each other across the midpoint Pm of the channel housing 11. Therefore, the heat exchange between the high-temperature refrigerant F1 and the low-temperature refrigerant F1 can be suppressed more reliably.

(4) In the manifold 10 according to (3), the channel housing 11 may have the rectangular shape when viewed in a direction orthogonal to a plane in which the high-temperature channel LH (first channel) is formed, and the midpoint Pm may be a middle position in the longitudinal direction of the channel housing 11.

In this configuration, the midpoint Pm is the middle position in the longitudinal direction of the rectangular channel housing 11, and the one end and the other end face each other across the midpoint Pm of the channel housing 11. Therefore, the heat exchange between the high-temperature refrigerant F1 and the low-temperature refrigerant F1 can be suppressed more reliably.

(5) In the manifold 10 according to any one of (1) to (4), the channel housing 11 internally having the high-temperature channel LH (first channel) and the low-temperature channel LL (second channel) may be joined to the plate member 13.

In this configuration, the channels through which the refrigerant F1 flows can be formed more easily.

(6) In the manifold 10 according to any one of (1) to (5), the high-temperature region RH (first region) including the high-temperature channel LH (first channel) may include the protruding region RH1 protruding toward the side where the low-temperature region RL (second region) including the low-temperature channel LL (second channel) is provided, and the main region RH2 located closer to the one end than the protruding region RH1 and having a size larger than the size of the protruding region RH1.

In this configuration, the main region RH2 is larger than the protruding region RH1. Therefore, the heat exchange between the high-temperature refrigerant F1 and the low-temperature refrigerant F1 can be suppressed.

(7) In the manifold 10 according to any one of (1) to (6), the channel housing 11 may further have the medium-temperature channel LM (third channel) through which the refrigerant F1 flows from the evaporator 4 or the battery cooler 5 (evaporator) to the compressor 1 (compressor), and at least part of the medium-temperature channel LM (third channel) may be provided between the high-temperature channel LH (first channel) and the low-temperature channel LL (second channel).

In this configuration, the at least part of the medium-temperature channel LM (third channel) through which the medium-temperature refrigerant F1 flows from the evaporator 4 or the battery cooler 5 (evaporator) to the compressor 1 (compressor) is provided between the high-temperature channel LH (first channel) through which the high-temperature refrigerant F1 flows and the low-temperature channel LL (second channel) through which the low-temperature refrigerant F1 flows. Therefore, the heat exchange between the high-temperature refrigerant F1 and the low-temperature refrigerant F1 can be suppressed.

(8) In the manifold 10 according to (7), the at least part of the medium-temperature channel LM (third channel) may be provided in the central portion of the channel housing 11.

In this configuration, the at least part of the medium-temperature channel LM (third channel) through which the medium-temperature refrigerant F1 flows from the evaporator 4 or the battery cooler 5 (evaporator) to the compressor 1 (compressor) is provided in the central portion of the channel housing 11. Therefore, the heat exchange between the high-temperature refrigerant F1 and the low-temperature refrigerant F1 can be suppressed.

(9) In the manifold 10 according to (7) or (8), the medium-temperature region RM (third region) including the medium-temperature channel LM (third channel) in the channel housing 11 may include the middle region RM1 provided between the high-temperature region RH (first region) including the high-temperature channel LH (first channel) and the low-temperature region RL (second region) including the low-temperature channel LL (second channel), and the overlapping region RM2 overlapping the high-temperature region RH (first region), and the size of the middle region RM1 may be larger than the size of the overlapping region RM2.

In this configuration, in the medium-temperature region RM (third region) including the medium-temperature channel LM (third channel), the middle region RM1 provided between the high-temperature region RH (first region) including the high-temperature channel LH (first channel) and the low-temperature region RL (second region) including the low-temperature channel LL (second channel) is larger than the overlapping region RM2 overlapping the high-temperature region RH (first region). Therefore, the heat exchange between the high-temperature refrigerant F1 and the low-temperature refrigerant F1 can be suppressed.

(10) In the manifold 10 according to any one of (1) to (9), the channel housing 11 may have the outlet H1 through which the refrigerant F1 from the water-cooled condenser 3 (condenser) flows out from the channel housing 11 to the on-off valve V1, and the outlet H1 may be located away from the high-temperature channel LH (first channel) at the position where the outlet H1 faces the on-off valve V1.

In this configuration, the outlet H1 through which the medium-low-temperature refrigerant F1 from the water-cooled condenser 3 (condenser) flows out from the channel housing 11 to the on-off valve V1 is located away from the high-temperature channel LH (first channel) through which the high-temperature refrigerant F1 flows at the position where the outlet H1 faces the on-off valve V1. Therefore, the heat exchange between the medium-low-temperature refrigerant F1 and the high-temperature refrigerant F1 can be suppressed.

### INDUSTRIAL APPLICABILITY

The present disclosure is applicable to manifolds.

### Description of the Reference Numerals

1: compressor (compressor), 3: water-cooled condenser (condenser), 4: evaporator (evaporator), 5: battery cooler (evaporator), 10: manifold, 11: channel housing, 12a: first end (one end), 12b: second end (other end), 13: plate member, F1: refrigerant, H1: outlet, H3: condenser outlet (condenser outlet), H4: condenser inlet (condenser inlet), L: refrigerant channel, LH: high-temperature channel (first channel), LL: low-temperature channel (second channel), LM: medium-temperature channel (third channel), Pm: midpoint, RH: high-temperature region (first region), RH1: protruding region, RH2: main region, RL: low-temperature region (second region), RM: medium-temperature region (third region), RM1: middle region, RM2: overlapping region, V1: on-off valve

## Claims

1. A manifold comprising a channel housing having a first channel through which a refrigerant flows from a compressor to a condenser, and a second channel through which the refrigerant flows from the condenser to an evaporator, wherein:
the first channel is provided near one end of the channel housing;
the second channel is provided near the other end of the channel housing; and
the first channel and the second channel are provided away from each other.

2. The manifold according to claim 1, wherein the first channel and the second channel are spaced away from each other by a distance equal to or longer than a distance between a condenser outlet through which the refrigerant flows out toward the condenser and a condenser inlet through which the refrigerant flows in from the condenser.

3. The manifold according to claim 1 or 2, wherein the one end and the other end face each other across a midpoint of the channel housing.

4. The manifold according to claim 3, wherein:
the channel housing has a rectangular shape when viewed in a direction orthogonal to a plane in which the first channel is formed; and
the midpoint is a middle position in a longitudinal direction of the channel housing.

5. The manifold according to claim 1 or 2, wherein the channel housing internally having the first channel and the second channel is joined to a plate member.

6. The manifold according to claim 1 or 2, wherein a first region including the first channel includes a protruding region protruding toward a side where a second region including the second channel is provided, and a main region located closer to the one end than the protruding region and having a size larger than a size of the protruding region.

7. The manifold according to claim 1 or 2, wherein:
the channel housing further has a third channel through which the refrigerant flows from the evaporator to the compressor; and
at least part of the third channel is provided between the first channel and the second channel.

8. The manifold according to claim 7, wherein the at least part of the third channel is provided in a central portion of the channel housing.

9. The manifold according to claim 7, wherein:
a third region including the third channel in the channel housing includes a middle region provided between a first region including the first channel and a second region including the second channel, and an overlapping region overlapping the first region; and
a size of the middle region is larger than a size of the overlapping region.

10. The manifold according to claim 1 or 2, wherein:
the channel housing has an outlet through which the refrigerant from the condenser flows out from the channel housing to an on-off valve; and
the outlet is located away from the first channel at a position where the outlet faces the on-off valve.
